(19) Europäisches Patentamt
European Patent Office
Office européen des brevets

(11) **EP 2 192 014 B1**

(12) **EUROPEAN PATENT SPECIFICATION**

(45) Date of publication and mention
of the grant of the patent:
**18.01.2012 Bulletin 2012/03**

(51) Int Cl.:
***B60W 30/04*** *(2006.01)*

(21) Application number: **09014505.3**

(22) Date of filing: **20.11.2009**

(54) **Device and process for preventing off-road vehicles from overturning**

Vorrichtung und Verfahren zur Überschlagsverhinderung für Geländefahrzeuge

Système et méthode de prévention de renversement pour véhicule tout terrain

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.11.2008 IT TO20080874**

(43) Date of publication of application:
**02.06.2010 Bulletin 2010/22**

(73) Proprietor: **C.O.B.O. S.p.A.**
**25024 Leno (BS) (IT)**

(72) Inventors:
• **Bonetti, Gianmarco**
**28053 Castelletto Sopra Ticino (NO) (IT)**

• **Mainardi, Ginetto**
**43039 Salsomaggiore Terme (PR) (IT)**

(74) Representative: **Garavelli, Paolo**
**A.BRE.MAR. S.R.L.**
**Via Servais 27**
**10146 Torino (IT)**

(56) References cited:
EP-A- 1 975 115        EP-A1- 2 065 689
WO-A2-01/55511        GB-A- 2 191 868
GB-A- 2 424 961        JP-A- 2001 347 910
US-A1- 2004 128 060    US-A1- 2005 102 083
US-A1- 2006 276 944    US-A1- 2008 208 416

**Description**

The present invention refers to a process for preventing off-road vehicles, in particular tractors, from overturning.

As known, some particular vehicles or off-road vehicles, such as, for example, agricultural tractors, excavators or heart-mover machines, operating on grounds that could be particularly rough, inconstant yielding and/or dangerous, suffer, more than other terrestrial vehicles, the risk of overturning, with all related problems connected to driver safety and integrity of the vehicle itself.

Given the particular nature of the above working environments, on such particular off-road vehicles it is not possible, or very difficult, to use systems, software and sensors for preventing them from overturning, specifically developed and proposed or cars and/or trucks, since they have been devised and parametrised on standard or foreseeable behaviours that the vehicle can assume on an asphalted and levelled road, and instead not inside a working yard, an agricultural field or any other environment like the previously described ones, consequently providing inadequate and unreliable responses and remedies.

US-A1-2008/208416 discloses a process according to the preamble of claim 1.

Therefore, object of the present invention is solving the above prior art problems by providing a process for preventing off-road vehicles from overturning specifically aimed to be used for such off-road vehicles on critical grounds.

Another object of the present invention is providing a process for preventing off-road vehicles from overturning that perform a prevention function, helping the driver not to operate under dangerous working conditions and situations and directly intervening on the off-road vehicle control.

Moreover, an object of the present invention is providing a process for preventing off-road vehicles from overturning that previously intervene on the driving decisions of the driver, by processing successive measures of admonishing parameters, interpreting their trend and signalling the driver about the presence of danger conditions.

Moreover, an object of the present invention is providing a process for preventing off-road vehicles from overturning that provide a correct and safe reply to environmental variables by the man-machine system.

The above and other objects and advantages of the invention, as will appear from the following description, are obtained by a process for preventing off-road vehicles from overturning as claimed in Claim 1.

Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:

- Figure 1 shows a block diagram representing a preferred embodiment of the process according to the present invention;
- Figure 2 shows a schematic representation of a off-road vehicle equipped with a device for performing the process of the present invention;
- Figure 3 shows a block diagram representing a preferred embodiment of the device of Fig. 2;
- Figure 4 shows a perspective view representing a preferred embodiment of a component of the device of Fig. 2;
- Figures 5a to 5d shows some operating modes of the component of Figure 4;
- Figure 6 shows computations, in the process of the invention, performed in place of sensors on the longitudinal axis (rise-descent paths) of an off-road vehicle;
- Figure 7 shows computations in the process of the invention, performed in place of sensors on the transverse axis (rightward or leftward inclined paths) of an off-road vehicle;
- Figure 8 shows the results and checks of computations performed in Figures 6 and 7;
- Figure 9 shows the basic principles for computing the load on front and rear axles of a tractor depending on the longitudinal position of its barycentre;
- Figure 10 shows the basic principles for computing the load on right and left axles of a tractor depending on the transverse position of its barycentre;
- Figure 11 shows the longitudinal barycentre position depending on the slope value;
- Figure 12 shows the dependence of the transverse barycentre position from the rightward or leftward inclination; and
- Figures 13 and 14 are views of computer screens (data sheets) including the lists of data of a tractor and a variable geometry tool, with their related measure units.

As will be described below in more detail, the device and process for preventing from overturning according to the present invention cooperate to continuously analyse a series of parameters called "admonishing", of an environmental nature and/or defined on a scientific base depending on dynamic stability computations for the off-road vehicle and/or depending on experiences collected from drivers and technicians that built the off-road vehicle itself: in particular, the admonishing parameters of the off-road vehicle are, for example, transverse and/or longitudinal slanting angle, steering angle, advancement speed, distribution of weights and their barycentre, etc.

Preferably, the admonishing parameters are divided into:

- environmental variables: they represent and describe ground constitution and conditions under which the off-road vehicle has to operate; preferably, environmental variables comprise measures about slope, inclination and axle oscillation to which the off-road vehicle is subjected;
- operator variables: they describe how the driver or operator interprets the use of the off-road vehicle through commands which are imparted to this latter one; preferably, operator variables comprise measures of advancement speed, steering angle, distribution of weights on rear and front axles, traction/slippage and lateral drift to which the off-road vehicle is subjected.

The admonishing parameters are continuously detected and compared with driving decisions made by the driver in order to immediately point out possible discrepancies: the way in which the off-road vehicle driver interprets and operates with the environment and in the contexts in which he has to operate, detected as function of the measured admonishing parameters, is then continuously compared with a corresponding safety driving model of the off-road vehicle, called "Safe Drive", and processed by the device according to the present invention: possible deviations between the admonishing parameters and the "Safe Drive" model are immediately detected; now, the overturning-preventing device and process according to the present invention can intervene according to two preferred operating modes:

- information mode: at least one danger-projection signal is generated, adapted to be displayed on displaying means, such as for example at least one display, that provide the driver with acoustic and luminous indications, possibly followed by an explicit graphic suggestion about what he has to do and in which way he has to operate on the off-road vehicle in order to go back to its safety conditions defined by the "Safe Drive" model and avoid the overturning of the off-road vehicle: it is also possible to provide that the danger-projection signal is communicated to the driver through other means or shapes, such as for example through a vibration on the steering wheel or on the seat;
- active mode: the process generates output control signals (for example through a CAN BUS) with which the device according to the present invention directly intervenes on the off-road vehicle in order to exert corrective measures on the driving mode by the driver (for example by reducing the advancement speed) in order to take back the off-road vehicle to the safety conditions defined by the "Safe Drive" model.

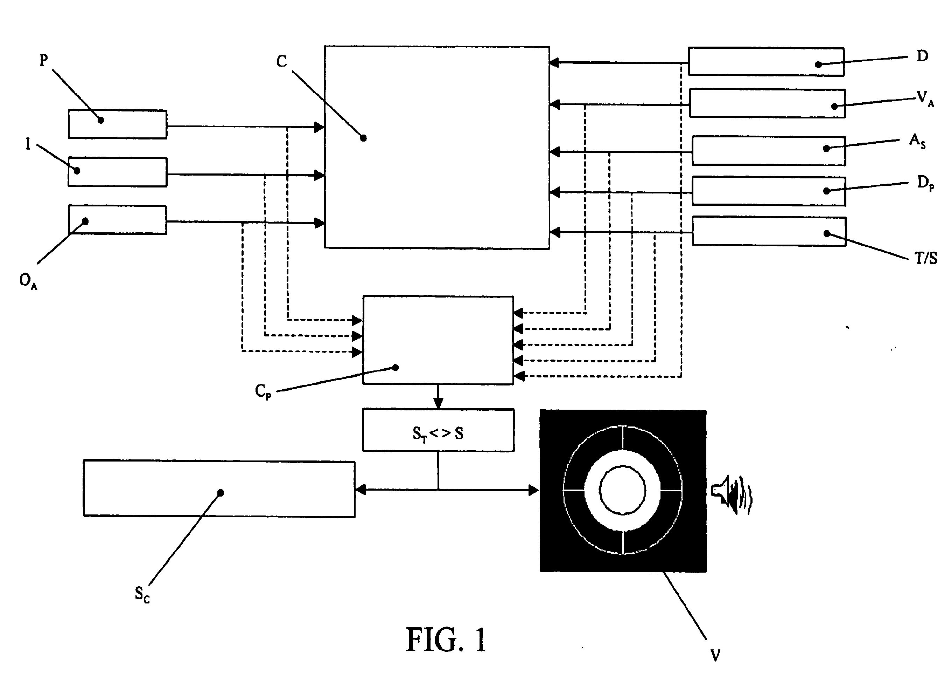

With particular reference to Figure 1, it is possible to note that a known process for preventing off-road vehicles from overturning comprises the steps of:

a) detecting, continuously or discreetly, the environmental variables (slope $P$, inclination $I$, axle oscillation $O_A$);
b) detecting, continuously or discreetly, the operator variables (advancement speed $V_A$, steering angle $A_S$, weight distribution $D_P$, traction or slippage $T/S$, drift $D$) determined by the driving modes of the off-road vehicle by the driver $C$;
c) computing $C_P$ at least one dependent variable function of the combined effect between environmental variables and operator variables and obtaining a trend estimate $S_T$; preferably, the dependent variable is computed as suitably weighted sum of the admonishing parameters;
d) comparing the trend estimate $S_T$ with the safety driving model of the off-road vehicle "Safe Drive", in particular, comparing the trend estimate $S_T$ with at least one threshold value $S$ of such model:
e) if $S_T < S$ signalling $V$ a danger-absent condition to the driver; preferably, the sum of maximum values of the operator variables allows by instantaneous environmental conditions corresponds to the danger-absent condition;

- $S_T < S$ constantly in time, keeping the danger-absent signalling $V$;
- if, after a period of time $\Delta t$, $S_T$ tends to increase, signalling $V$ a moderate danger condition to the driver; possibly, knowing the composition of the weighted sum of the admonishing parameters, it is possible to signal $V$ to the driver the variable(s) that most contributed to each the moderate danger condition and the most influent operator variable on which it is necessary to act to take back the off-road vehicle to a danger-absent condition. If, afterwards, after a period of time $\Delta t$, $S_T$ tends to decrease, signalling $V$ a danger-absent condition to the driver; if instead $S_T$ still tends to increase, signalling $V$ a high danger condition to the driver; if after at least one successive period of time $\Delta t$, $S_T$ does not decrease, signalling $V$ a severe danger condition to the driver; e) possibly, preferably through a CAN BUS, if the off-road vehicle is under a moderate or high or severe danger condition, providing $S_C$ suitable automatic control signals to the off-road vehicle to control the operator variable (s) that contributed most to reach the danger condition and report a danger-absent condition.

Obviously, the present invention also deals with a computer program comprising program code means adapted to perform al or part of the steps of the process as described below when such program is run on at least one computer or processing means.

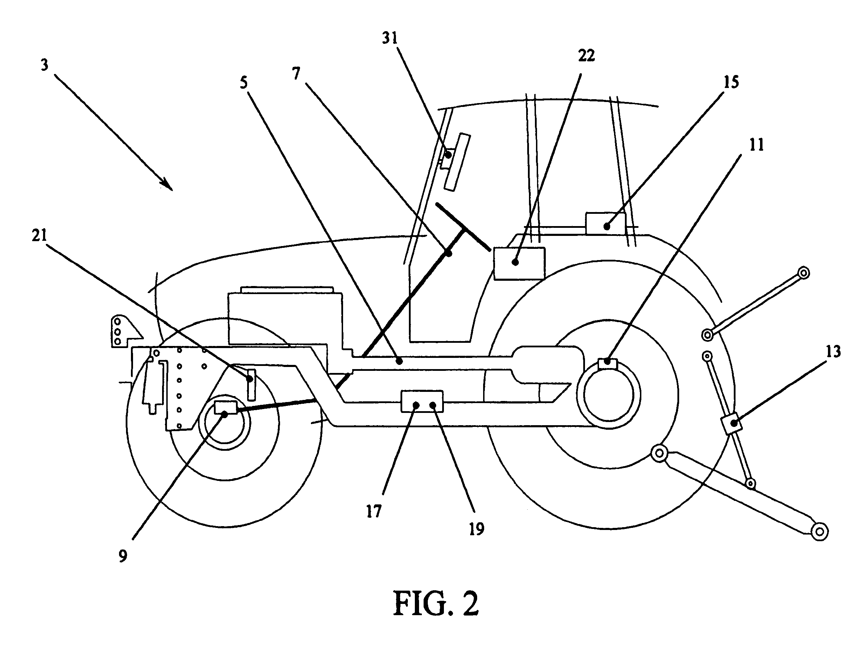

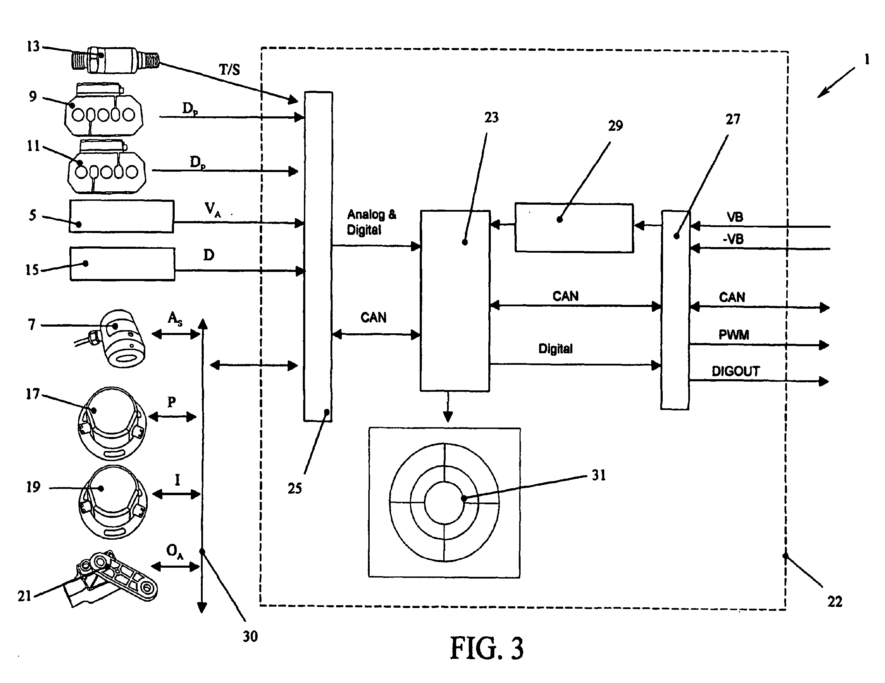

With reference now to Figures 2 and 3, it is possible to note that a device 1 for preventing a off-road vehicle 3, in particular a tractor, from overturning, comprises:

- at least one first sensor 5, 7, 9, 11, 13, 15 adapted to detect at least one operator variable; preferably, the advancement speed value $V_A$ is detected by at least one sensor 5 operating on the kinematic chain ("power train") of the off-road vehicle 3 or composed of at least one Global Positioning System (GPS); the drift value D is detected through at least one GPS or inertial system 15; the steering angle value $A_S$ is detected through at least one angular sensor 7 (such as, for example, a gyroscope or an encoder); the weight distribution values $D_P$ on rear and font axles are detected by respective load or force transducers 9, 11; the traction/slippage value T/S is detected through at least one respective pressure transducer 13;

- at least one second sensor 17, 19, 21 adapted to detect at least one environmental variable; preferably, the slant P and inclination I values are detected through at least one respective inclinometer 17, 19 such as, for example, an accelerometric sensor; the axle oscillation values $O_A$ are detected by at least one angular or linear position sensor 21;

- at least one control unit 22 comprising processing means 23 of signals coming from the sensors 5, 7, 9, 11, 13, 15, 17, 19, 21 by interposing suitable input interface means 25, such processing means 23 being adapted in particular to carry out the program code means of the process according to the present invention, output interface means 27, electric supply means 29 and possibly bilateral communication means between the processing means 23 and the sensors 5, 7, 9, 11, 13, 15, 17, 19, 21 by interposing input interface means 25: preferably, such bilateral communication means are made as at least one CAN BUS 30 to allow the transfer from the processing means 23 to the specific driving members of the off-road vehicle 3 of the suitable automatic control signals to control the operator variable (s) that contributed most to reach a danger condition and restore a danger-absent condition; and

- displaying means 31 of at least one danger signal.

Obviously, the device 1 can be made autonomously including all above components, and be integrated with components, and in particular the sensors, already present on the off-road vehicle 3 care of the manufacturer.

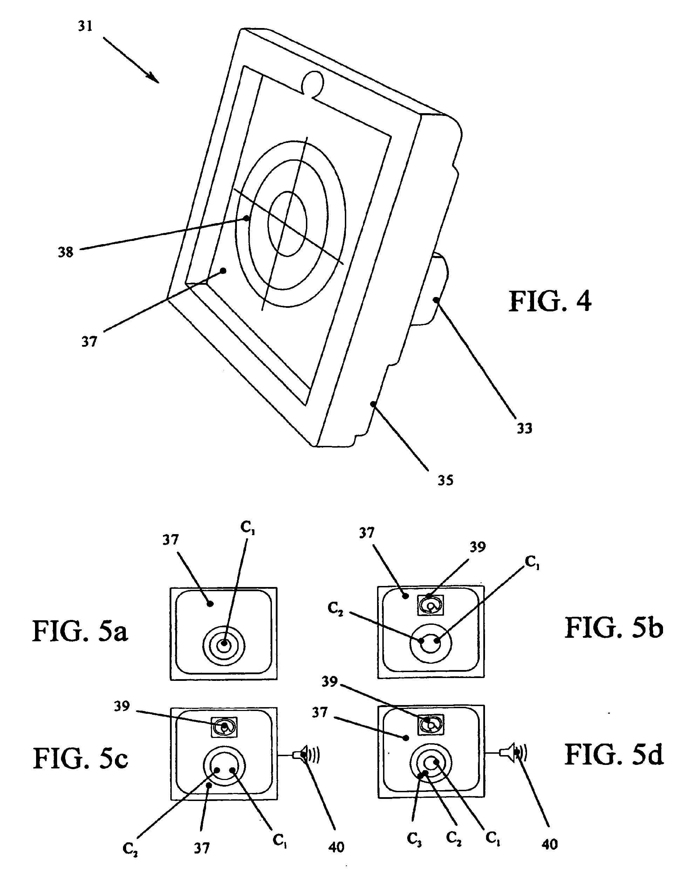

With reference in particular to Figure 4, it is possible to note that the displaying means 31, suitably equipped with mechanical connecting means 33 to the off-road vehicle 3 (for example on the driving console) and with electrical connecting means 35 to the processing means 23, comprise at least one display 37 on which the existing danger status can be displayed. The displaying means 31 can further comprise acoustic signalling means (such as for example a buzzer 40) or vibration signalling means.

The following Table 1 summarises for clarity the preferred types of sensors used for detecting the admonishing parameters and their positioning on the off-road vehicle 3:

Table 1

| ADMONISHING PARAMETERS | WHERE | WITH WHAT | NOTES |
|---|---|---|---|
| Advancing speed | Power Train / Cabin Roof | Integrated in the vehicle / GPS | CAN BUS |
| Steering angle | Steering Kinematism | Integrated in the vehicle /Angular or linear sensor | In automotive, already available for stability control |
| Front axle oscillation | On steering axle | Angular or linear position sensors | |
| Weight distribution on front and rear axles | On axles | Load cells or extension-meter / Computation | |
| Traction and slippage | Traction control | Already integrated radars and/or sensors / Computation | |
| Lateral drift | Car chassis | Inertial system | |
| Slope detector | Car chassis | Longitudinal inclinometer | Possibly coupled with inclination detector |

(continued)

| ADMONISHING PARAMETERS | WHERE | WITH WHAT | NOTES |
|---|---|---|---|
| Inclination detector | Car chassis | Transverse inclinometer | Possibly coupled with slope detector |

Preferably, as can be noted in particular from Figures 5a to 5d, the display 37 comprises a graphic display structure with concentric circles 38 to display with different shapes, positions and colours the existing detected danger status: in particular, the graphic display structure with concentric circles 38 shows:

- a circle with minimum diameter $C_1$, preferably green coloured, for signalling a danger-absent condition to the driver (Figure 5a);
- a circle with greater diameter $C_2$, concentric to the previous circle $C_1$, preferably yellow coloured, for signalling a moderate danger condition to the driver (Figure 5b); moreover, the display 37 can show an icon 39 representing the variable(s) that contributed most to reach the danger condition;
- the previous concentric circles $C_1$, $C_2$, and the icon 39, in addition to activating the buzzer 40 with an intermittent sound for signalling a high danger condition to the driver (Figure 5c);
- a circle with maximum diameter $C_3$, concentri to the previous concentric circles $C_1$, $C_2$, preferably red coloured, the icon 39 in addition to activating the buzzer 40 with a continuous sound for signalling a severe danger condition to the driver (Figure 5d).

As stated above, the determination of the residual load on axles is one of the basic functions of the above device, since it establishes the position of the barycentre of the tractor-tool assembly and therefore the static stability margin, to which aggravating factors, due to operator and environmental variables, are added.

For such purpose, some sensors have been provided, composed of load cells 9 and 11, or extension-meters suitable to detect the distortion under load of tractor axle shafts or towing hook 13, previously described.

Since it is foreseen to install the above device also on already operating off-road vehicles, it is rather costly, or even impossible, to apply such sensors in retro-fitting. This is due to the configuration of mechanical members, not originally pre-arranged to accept such devices. Also manufacturers of tractors and tools will only gradually introduce such sensors originally or will only gradually arrange their vehicles in order to insert them in a simple, efficient and inexpensive way.

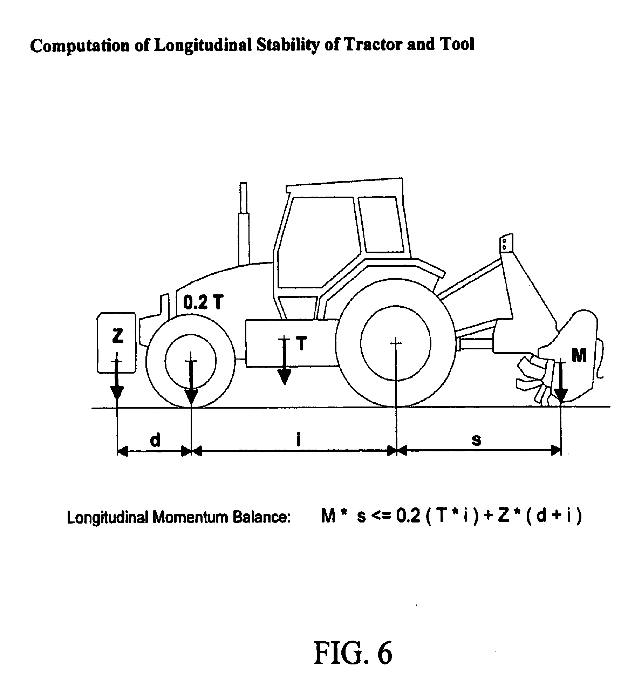

Therefore, as show in Figures 6 to 14, an inventive process has been devised, based on computations instead of a direct measure. The advantage of such process is that it does not require particular sensors, that can further be subjected to failures and whose signal can be affected by thermal phenomena and torsions of structures.

In particular, this process uses the knowledge of data related to tractor and tool barycentre in terms of longitudinal, transverse and height positions, and moreover the knowledge of the total weight of off-road vehicles, in addition to a series of quantities, that can be easily measured, such as tractor pitch and truck-gauge, and applies the principle of decomposition of forces.

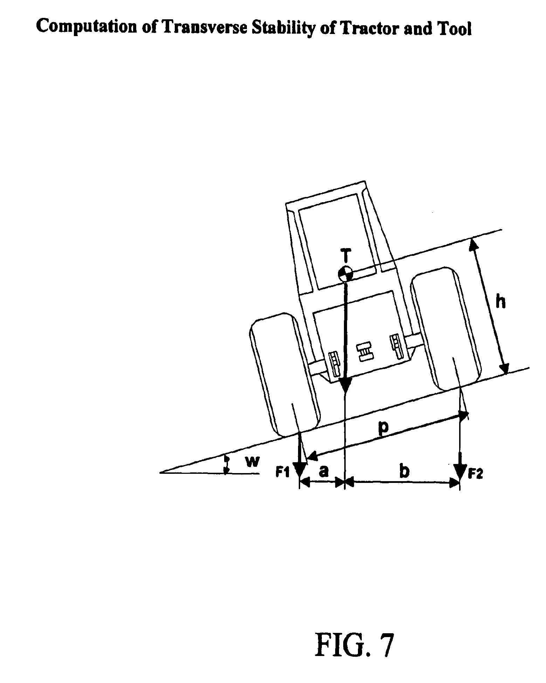

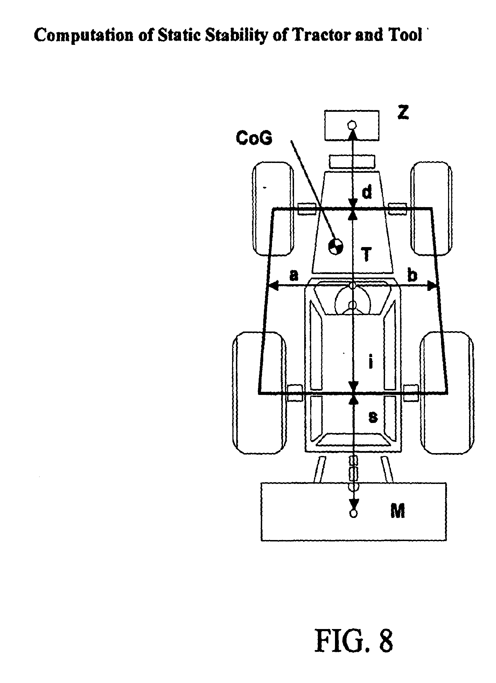

Computations are performed simultaneously both on the longitudinal axis (rise-descent paths, Fig. 6) and on the transverse axis (rightwards and leftwards inclined paths, Fig. 7), verifying that the position of the global centre of gravity (CoG in Fig. 8) does not go out of the perimeter of the off-road vehicle, as shown by the trapezoidal-shaped lines in Fig. 8.

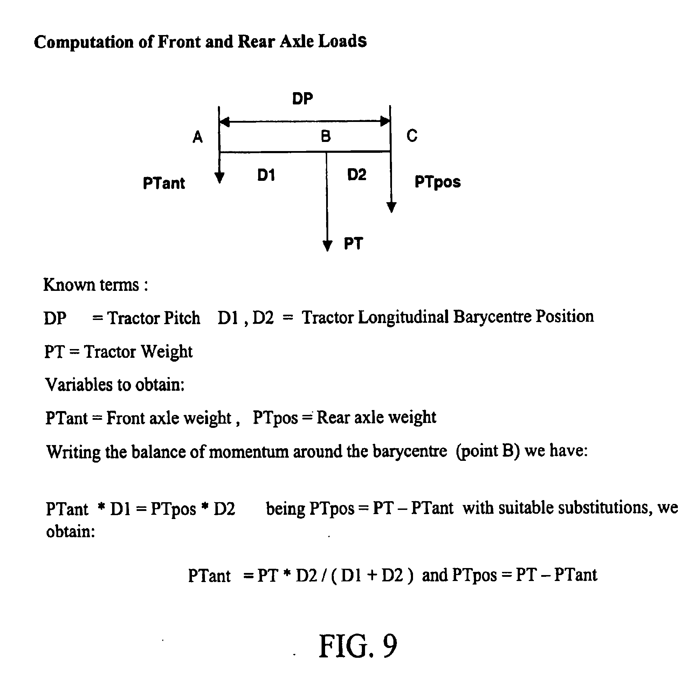

The diagram in Fig. 9 shows the basic principles for computing the load on front and rear axles of a tractor depending on the longitudinal position of its barycentre. Adding a tool or a ballast, the total load on the same axles will be computed depending on the new balance of momentum around the rear axle (C), as already shown in Fig. 6.

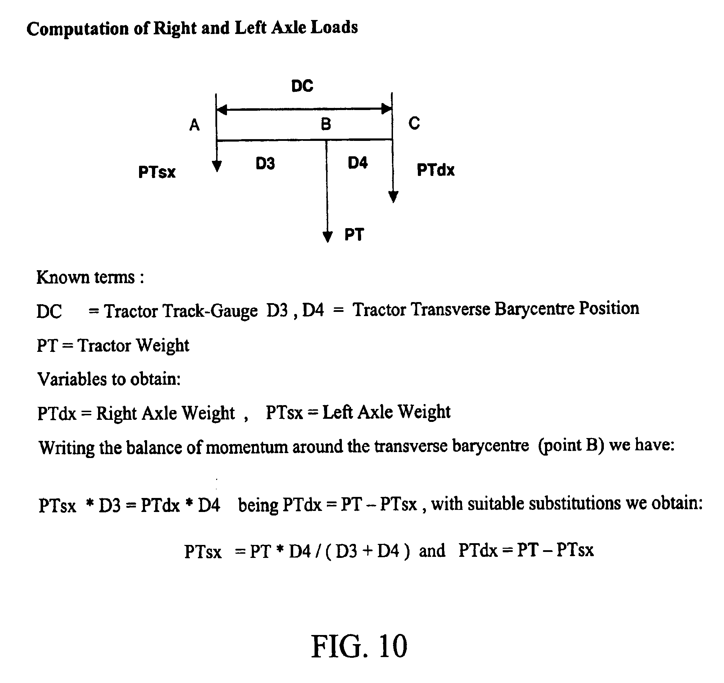

The diagram in Fig. 10 shows the basic principle for computing the load on right and left axles of a tractor depending on the transverse position of its barycentre. Adding a tool, the total barycentre will move as inverse function to the proportion of weights, so that, from the equivalent transverse position, it is possible to compute the final weights on right and left axles.

In particular, the step of computing the load on front and rear axles comprises the sub-steps of:

- providing the weight of the front axle (PTant) of the off-road vehicle;
- providing the weight of the rear axle (PTpos) of the off-road vehicle; and
- computing the balance of momentum around the barycentre of the off-road vehicle according to the following equations:

$$PTant = PT * D2/(D1 + D2),$$

and

$$PTpos = PT - PTant,$$

where: D1 and D2 are the longitudinal barycentre positions of the off-road vehicle, and PT is the off-road vehicle weight.

Still in particular, the step of computing the load on right and left axles comprises the sub-steps of:

- providing the weight of the right axle (PTdx) of the off-road vehicle;
- providing the weight of the left axle (PTsx) of the off-road vehicle; and
- computing the balance of momentum around the barycentre of the off-road vehicle according to the following equations:

$$PTsx = PT * D4/(D3 + D4),$$

and

$$PTdx = PT - PTsx,$$

where: D3 and D4 are the transverse barycentre positions of the off-road vehicle, and PT is the off-road vehicle weight.

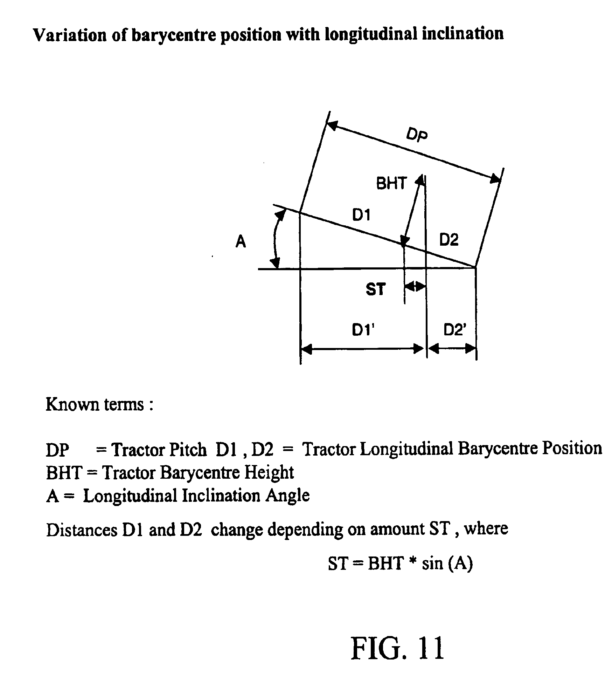

As can be seen from Fig. 11, the longitudinal barycentre position, when the slope changes, is affected by its height BHT, that is decomposed into a variable ST that will move frontward or backward the barycentre itself.

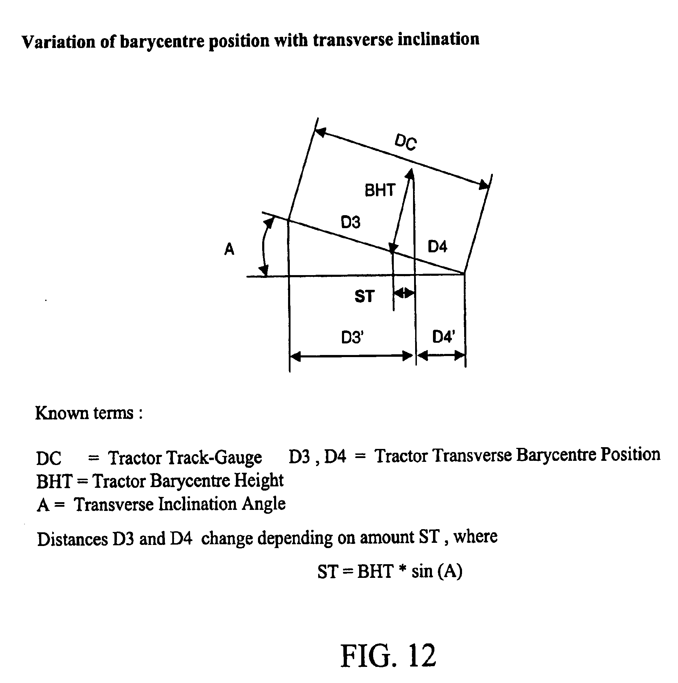

Fig. 12 instead shows the similar dependence of the transverse barycentre position from the rightwards or leftwards inclination.

In order to be able to correctly perform the computation of the load on axles, it is necessary to set a series of parameters related to the off-road vehicle on which the device of the invention is installed, and related to each tool connected thereto.

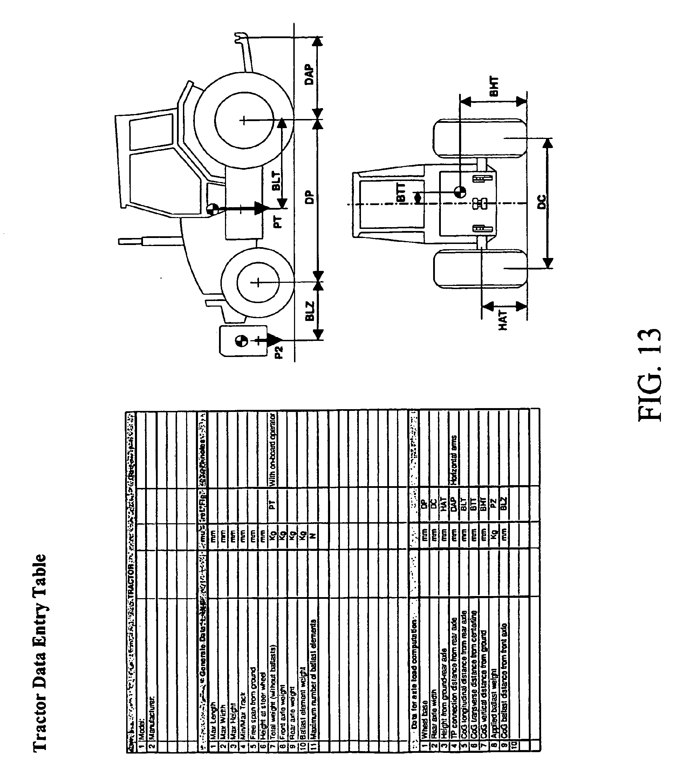

For such purpose, an electronic data sheet (shown in Fig. 13) has been created, including the list of tractor data to be inserted with their related measure unit.

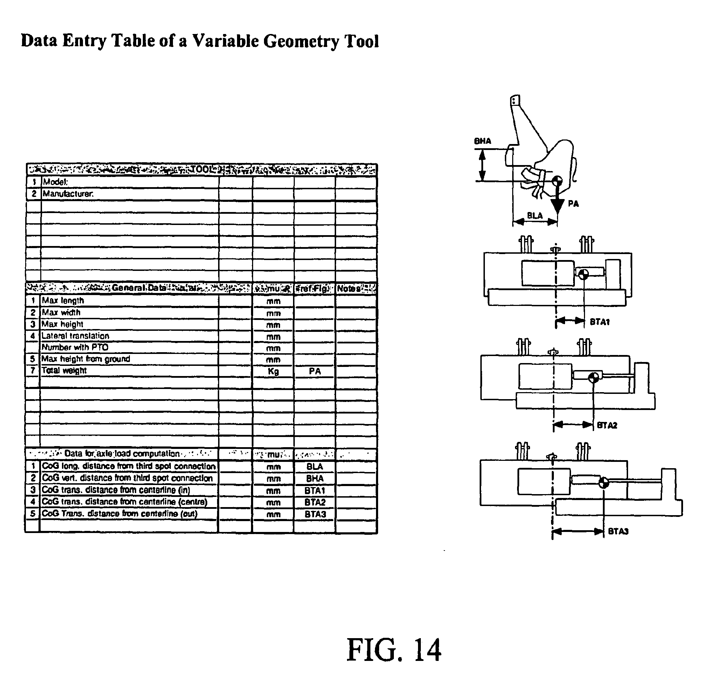

Similarly, an electronic data sheet (shown in Fig. 14) has been created, that includes the list of various data required in order to completely describe a tool.

Since many tools are of the variable-geometry type, further measures have been provided about the position of barycentres depending on the tool development. This is valid for example for slicing machines or milling machines, whose cutting member can be laterally moved: in this case, at least three values are required for the transverse barycentre, performed with tools inside, in the centre or outside.

Instead, in case of carried tanks or containers, for example spraying machines, manure spreaders or trailers, it will be necessary to measure the barycentre height under empty, half-full and full conditions of tanks or caissons. The operator will then have the chance of manually selecting the position in which one operates.

The acquisition of data related to data entry can be made by using data supplied from the tractor and tool manufacturers, or through a series of weight measures, performed by using for example a weigh-bridge, with the tractor-tool assembly both in horizontal and in inclined position. Through suitable trigonometric computations, the required data can be obtained.

Data related to the data entry of each tractor and tool model will be collected in a database.

When installing, a vehicle manufacturer, a dealer or an installing operator will be equipped with a copy of the database, or will be able to download it from Internet or the like, through a connection to a suitable site provided with adequate passwords.

He will then be able to recover therefrom the set of data required depending on used tractor(s) and their related tools.

A possible variation can consist in providing every tool with a small electronic circuit, equipped with a memory suitable for containing data related to its own data entry. Coupling of such circuit to the control system placed on the off-road vehicle can occur through a serial cable, or through wireless technology (transponder, radio, etc.) or the like.

**Claims**

1. Process for preventing off-road vehicles from overturning, comprising the steps of:

   a) detecting, continuously or discreetly, environmental variable values ($P$, $I$, $O_A$);
   b) detecting, continuously or discreetly, operator variable values ($V$, $A_S$, $D_P$, $T/S$, $D$) determined by the driving modes of said off-road vehicle by a driver ($C$);
   c) computing ($C_P$) at least one dependent variable function of a combined effect between said environmental variables and said operator variables and obtaining a trend estimate ($S_T$);
   d) comparing said trend estimate ($S_T$) with a safety driving model of said off-road vehicle, in particular comparing said trend estimate ($S_T$) with at least one threshold value ($S$) of said model:

      - if said trend estimate ($S_T$) is less than said threshold value ($S$), signalling ($V$) a danger-absent condition to said driver ($C$);
      - if said trend estimate ($S_T$) is less than said threshold value ($S$) constantly in time, keeping said danger-absent signalling ($V$);
      - if said trend estimate ($S_T$) tends to increase, signalling ($V$) a moderate danger condition to said driver ($C$);
      - if after a period of time ($\Delta t$) said trend estimate ($S_T$) tends to decrease, signalling ($V$) a danger-absent condition to said driver ($C$);
      - if said trend estimate ($S_T$) still tends to increase, signalling ($V$) a high danger condition to said driver ($C$);
      - if after at least one successive period of time ($\Delta t$), said trend estimate ($S_T$) does not decrease, signalling ($V$) a severe danger condition to said driver ($C$);

   **characterised in that**, in order to read the load on axles, and to measure the traction/slippage, a computation method is used, comprising the steps of:

      - computing the longitudinal stability of said off-road vehicle and at least one of its tools along a rise-descent path;
      - computing the transverse stability of said off-road vehicle and at least one of its tools along a rightwards and leftwards inclined path;
      - computing the load on front and rear axles of said off-road vehicle depending on the longitudinal position of its barycentre, wherein, by adding a tool or a ballast, the total load on the same axles is computed depending on the new balance of momentum around the rear axle ($C$) of the off-road vehicle;
      - computing the load on right and left axles of the off-road vehicle depending on the transverse position of its barycentre, wherein, by adding a tool, the total barycentre moves as inverse function to the proportion of weights, so that, from the equivalent transverse position, it is possible to compute the final weights on right and left axles; and
      - verifying that the computed position of the global centre of gravity of said off-road vehicle and at least one of its tools does not go out of the perimeter of said off-road vehicle.

2. Process according to claim 1, wherein the step of computing the load on front and rear axles comprises the sub-steps of:

      - providing the weight of the front axle (PTant) of the off-road vehicle;
      - providing the weight of the rear axle (PTpos) of the off-road vehicle; and
      - computing the balance of momentum around the barycentre of the off-road vehicle according to the following equations:

$$PTant = PT * D2/(D1 + D2),$$

and

$$PTpos = PT - PTant,$$

where: D1 and D2 are the longitudinal barycentre positions of the off-road vehicle, and PT is the off-road vehicle weight.

3. Process according to claim 1, wherein the step of computing the load on right and left axles comprises the sub-steps of:

- providing the weight of the right axle (PTdx) of the off-road vehicle;
- providing the weight of the left axle (PTsx) of the off-road vehicle; and
- computing the balance of momentum around the barycentre of the off-road vehicle according to the following equations:

$$PTsx = PT * D4/(D3 + D4),$$

and

$$PTdx = PT - PTsx,$$

where: D3 and D4 are the transverse barycentre positions of the off-road vehicle, and PT is the off-road vehicle weight.

4. Process according to claim 1, wherein, in order to be able to correctly perform the computation of the load on axles, a series of parameters are set, related to said off-road vehicle, and related to each tool connected thereto, such parameters being contained in a first electronic data sheet, including the list of tractor data to be inserted with their related measure unit, and being contained in a second electronic data sheet, that includes the list of various data required in order to completely describe a tool, and if the tools are of the variable-geometry type, further measures are performed about the position of barycentres depending on the tool development.

5. Process according to claim 1, wherein the acquisition of data related to the data entry is made by using data supplied from the tractor and tool manufacturers, or through a series of weight measures, with the tractor-tool assembly both in horizontal and in inclined position, the required data being obtained through trigonometric computations.

6. Process according to claim 1, wherein data related to the data entry of each tractor and tool model are collected in a database, and, when installing, a vehicle manufacturer, a dealer or an installing operator is equipped with a copy of the database, or is able to download the database from Internet or the like, being able to recover therefrom the set of data required depending on used tractor(s) and their related tools.

7. Process according to claim 1, wherein every tool is provided with a small electronic circuit, equipped with a memory suitable for containing data related to its own data entry, the coupling of such circuit to the control system placed on the off-road vehicle occuring through a serial cable, or through wireless technology (transponder, radio, etc.).

8. Computer program comprising computer program code means adapted to carry out the steps of the process according to any one of the previous claims when such program is run on a computer.


**Patentansprüche**

1. Verfahren zur Verhinderung des Umkippens von Geländefahrzeugen mit folgenden Phasen:

a) Kontinuierlich und diskret Werte der Umgebungsvariablen erfassen (P, I, $O_A$);

b) Kontinuierlich und diskret Werte der Bedienervariablen ($V$, $A_S$, $D_P$, $T/S$, $D$) erfassen, die durch die Fahrweise des genannten Geländefahrzeuges durch den Fahrer ($C$) bestimmt werden;

c) Mindestens eine abhängige Variable der Funktion ($C_P$) einer kombinierten Wirkung zwischen den genannten Umgebungsvariablen und den genannten Bedienervariablen berechnen und eine Tendenzschätzung ($S_T$) erhalten;

d) Die genannte Tendenzschätzung ($S_T$) mit dem Modell einer sicheren Fahrweise des genannten Geländefahrzeuges vergleichen, insbesondere die genannte Tendenzschätzung ($S_T$) mit mindestens einem Grenzwert ($S$) des genannten Modells vergleichen:

- Wenn die genannte Tendenzschätzung ($S_T$) kleiner als der genannte Grenzwert ($S$) ist, dem genannten Fahrer ($C$) einen gefahrlosen Zustand anzeigen ($V$);
- Wenn die genannte Tendenzschätzung ($S_T$) im Laufe der Zeit konstant kleiner als der genannte Grenzwert ($S$) ist, die genannte Anzeige für den gefahrlosen Zustand beibehalten ($V$);
- Wenn die genannte Tendenzschätzung ($S_T$) dazu neigt, anzusteigen, dem genannten Fahrer den Zustand einer mäßigen Gefahr anzeigen ($V$);
- Wenn nach einem Zeitraum ($\Delta t$) die genannte Tendenzschätzung ($S_T$) dazu neigt, sich zu reduzieren, dem genannten Fahrer ($C$) einen gefahrlosen Zustand anzeigen ($V$);
- Wenn die genannte Tendenzschätzung ($S_T$) weiterhin dazu neigt, anzusteigen, dem genannten Fahrer ($C$) den Zustand einer hohen Gefahr anzeigen ($V$);
- Wenn sich die genannte Tendenzschätzung ($S_T$) nach einem folgenden Zeitraum ($\Delta t$) nicht reduziert, dem genannten Fahrer ($C$) den Zustand einer schweren Gefahr anzeigen ($V$);

das **dadurch gekennzeichnet ist, dass** zum Ablesen der Achslasten und zur Messung der Traktion/des Rutschens ein Rechenverfahren verwendet wird, das folgende Phasen enthält:
- Die Längsstabilität des genannten Geländefahrzeuges und mindestens eines seiner Instrumente längs einer Auf-/Abfahrtstrecke berechnen;
- Die Querstabilität des genannten Geländefahrzeuges und mindestens eines seiner Instrumente längs einer nach rechts oder links geneigten Strecke berechnen;
- Die vordere und hintere Achslast des genannten Geländefahrzeuges je nach der Längsposition seines Schwerpunktes berechnen, in dem durch das Hinzufügen eines Instruments oder Ballasts die Gesamtlast auf denselben Achsen aufgrund des neuen Gleichgewichts des entsprechenden Moments an der Hinterachse ($C$) des Geländefahrzeuges berechnet wird;
- Die rechte und linke Achslast des Geländefahrzeuges je nach der Querposition seines Schwerpunktes messen, in dem sich der gesamte Schwerpunkt durch Hinzufügen eines Instruments umgekehrt zum Gewichtsverhältnis bewegt, sodass es aus der gleichwertigen Querposition möglich ist, die abschließenden Gewichte an der rechten und linken Achse zu berechnen; und
- Prüfen, ob die berechnete Position des gesamten Schwerpunktes des genannten Geländefahrzeuges und mindestens eines seiner Instrumente nicht den Umfang des genannten Geländefahrzeuges verlässt.

2. Verfahren gemäß Patentanspruch 1, in dem die Phase zur Berechnung der vorderen und hinteren Achslast folgende Unterphasen einschließt:

- Das Gewicht der Vorderachse (PTant) des Geländefahrzeuges voraussehen;
- Das Gewicht der Hinterachse (PTpos) des Geländefahrzeuges voraussehen; und
- Das Gleichgewicht des entsprechenden Moments im Schwerpunkt des Geländefahrzeuges gemäß folgenden Gleichungen berechnen:

$$PTant = PT * D2/(D1 + D2),$$

und

$$PTpos = PT - PTant,$$

wo: $D1$ und $D2$ die Positionen des Längsschwerpunktes des Geländefahrzeuges sind und $PT$ das Gewicht des Geländefahrzeuges ist.

3. Verfahren gemäß Patentanspruch 1, in dem die Phase zur Berechnung der rechten und linken Achslast folgende Unterphasen einschließt:

- Das Gewicht der rechten Achse (PTdx) des Geländefahrzeuges voraussehen;
- Das Gewicht der linken Achse (PTsx) des Geländefahrzeuges voraussehen; und
- Das Gleichgewicht des entsprechenden Moments im Schwerpunkt des Geländefahrzeuges gemäß folgenden Gleichungen berechnen:

$$PTsx = PT * D4/(D3 + D4),$$

und

$$PTdx = PT - PTsx,$$

wo: D3 und D4 die Positionen des Querschwerpunktes des Geländefahrzeuges sind und PT das Gewicht des Geländefahrzeuges ist.

4. Verfahren gemäß Patentanspruch 1, in dem zu dem Zweck, korrekt die Berechnung der Achslasten berechnen zu können, mehrere Parameter eingegeben werden, die sich auf das genannte Geländefahrzeug beziehen sowie auf jedes mit diesem verbundenen Instrument, die entsprechenden Parameter sind in einem ersten elektronischen Datenblatt enthalten, das die Liste der Traktordaten enthält, die mit ihrer entsprechenden Maßeinheit eingegeben werden müssen, und in einem zweiten elektronischen Datenblatt enthalten, das die Liste der verschiedenen Daten enthält, die gefordert werden, um ein Instrument vollständig zu beschreiben, und wenn die Instrumente eine variable Geometrie haben, werden weitere Messungen an der Position der Schwerpunkte aufgrund der Entwicklung des Instruments ausgeführt.

5. Verfahren gemäß Patentanspruch 1, in dem die Datenerfassung für die Dateneingabe mit Verwendung der von den Traktor- und Instrumentenherstellern angegebenen Daten oder durch mehrere Gewichtsmessungen mit der Gruppe Traktor-Instrument in sowohl horizontaler als auch in geneigter Position erfolgt, die geforderten Daten werden durch trigonometrische Berechnungen erhalten.

6. Verfahren gemäß Patentanspruch 1, in dem die Daten für die Dateneingabe jedes Traktor- und Instrumentenmodells in einer Datenbank gesammelt werden und einem Hersteller, Händler oder Fahrzeuginstallateur bei der Installation eine Kopie der Datenbank ausgehändigt wird, oder dieser die Datenbank aus dem Internet herunterladen kann o. ä., sodass er aus dieser die gesamten geforderten Daten aufgrund der verwendeten Traktoren und ihrer entsprechenden Instrumente erhalten kann.

7. Verfahren gemäß Patentanspruch 1, in dem jedes Instrument mit einem kleinen elektronischen Kreis ausgestattet ist, der mit einem Speicher versehen ist, welcher dazu geeignet ist, Daten entsprechend seiner Dateneingabe zu enthalten, die Verbindung eines solchen Kreises mit dem Steuersystem, das sich auf dem Geländefahrzeug befindet, erfolgt durch ein serielles Kabel oder durch eine drahtlose Technologie (Transponder, Radio usw.).

8. Computerprogramm mit Codevorrichtungen eines Computerprogramms, die dazu dienen, alle oder Teile der Phasen des genannten Verfahrens gemäß einem beliebigen der vorhergehenden Patentansprüche auszuführen, wenn ein solches Programm auf einem Computer ausgeführt wird.

**Revendications**

1. Procédé pour prévenir le basculement des véhicules tout terrain, comprenant les étapes suivantes:

a) relevé, de manière continue ou discrète, des valeurs des variables environnementales (P, I, $O_A$);
b) relevé, de manière continue ou discrète, des valeurs des variables opérateur (V, $A_S$, $D_P$, T/S, D) déterminées par les différents modes de conduite du véhicule tout terrain de la part du conducteur (C);

c) calcul ($C_P$) d'au moins une variable dépendante, fonction d'un effet combiné entre lesdites variables environnementales et lesdites variables opérateur et formulation d'une estimation de tendance ($S_T$);

d) comparaison de ladite estimation de tendance ($S_T$) avec un modèle de conduite en sécurité dudit véhicule tout terrain, comparaison notamment de ladite estimation de tendance ($S_T$) avec au moins une valeur de seuil (S) dudit modèle:

- si ladite estimation de tendance ($S_T$) est inférieure à ladite estimation de seuil (S), signaler (V) au conducteur (C) une condition d'absence de danger;
- si ladite estimation de tendance ($S_T$) est inférieure à ladite estimation de seuil (S) de manière constante dans le temps, maintenir ladite signalisation (V) d'absence totale de danger;
- si ladite estimation de tendance ($S_T$) à tendance à augmenter, signaler (V) au conducteur (C) une condition de danger modéré;
- si après une période de temps ($\Delta t$), ladite estimation de tendance ($S_T$) a tendance à diminuer, signaler (V) au conducteur (C) une condition d'absence de danger;
- si ladite estimation de tendance ($S_T$) à tendance à augmenter, signaler (V) au conducteur (C) une condition de danger élevé;
- si après au moins une successive période de temps ($\Delta t$), ladite estimation de tendance t ($S_T$) ne diminue pas, signaler (V) au conducteur (C) une condition de danger grave;
- **caractérisé en ce que**, dans le but de lire la charge sur les essieux et de mesurer la traction/glissement, on utilise une méthode de calcul comprenant les phases suivantes:
- calcul de la stabilité longitudinale dudit véhicule tout terrain et d'au moins un de ses équipements le long d'un parcours de montée/descente;
- calcul de la stabilité transversale dudit véhicule tout terrain et d'au moins un de ses équipements le long d'un parcours en pente vers la droite et vers la gauche;
- calcul de la charge sur les essieux AV et AR dudit véhicule tout terrain suivant la position longitudinale de son centre de gravité où, en ajoutant un équipement ou alors un lest, la charge totale sur ces mêmes essieux étant calculée suivant le nouvel équilibre de moment autour de l'essieu arrière (C) du véhicule tout terrain;
- calcul de la charge sur les essieux de droite et de gauche dudit véhicule tout terrain suivant la position transversale de son centre de gravité où avec l'ajout d'un équipement, le centre de gravité total se déplace de manière inverse à la proportion des poids, de manière à ce qu'à partir de la position transversale équivalente il soit toujours possible de calculer le poids final sur les essieux droit et gauche; et
- vérification que la position calculée du centre de gravité global dudit véhicule tout terrain et d'au moins un de ses équipements ne sorte pas du périmètre dudit véhicule tout terrain.

2. Procédé selon la revendication 1, dans lequel l'étape de calcul de la charge sur les essieux avant et arrière comprend encore les sous étapes suivantes:

- prévision du poids de l'essieu avant (PTant) du véhicule tout terrain;
- prévision du poids de l'essieu arrière (PTpos) du véhicule tout terrain; et
- calcul de l'équilibre du moment autour du centre de gravité du véhicule tout terrain selon les équations ci-dessous:

$$PTant = PT * D2/(D1 + D2),$$

et

$$PTpos = PT - PTant,$$

où: D1 et D2 sont les positions des centres de gravité longitudinaux du véhicule tout terrain, et PT est le poids du véhicule tout terrain.

3. Procédé selon la revendication 1, dans lequel l'étape de calcul de la charge sur les essieux droit et gauche comprend les sous étapes suivantes:

- prévision du poids de l'essieu droit (PTdx) du véhicule tout terrain;
- prévision du poids de l'essieu gauche (PTsx) du véhicule tout terrain; et
- calcul de l'équilibre du moment autour du centre de gravité du véhicule tout terrain selon les équations ci-dessous:

$$PTsx = PT * D4/(D3 + D4),$$

et

$$PTdx = PT - PTsx,$$

où: D3 et D4 sont les positions des centres de gravité transversaux du véhicule tout terrain, et PT est le poids du véhicule tout terrain.

4. Procédé selon la revendication 1, dans lequel toute une série de paramètres est prédéfinie dans le but de pouvoir exécuter correctement le calcul de la charge sur les essieux, paramètres inhérents audit véhicule tout terrain et inhérents à chaque équipement qui lui est rattaché ; lesdits paramètres étant contenus dans une première feuille électronique contenant la liste des données du tracteur à saisir avec leur unité de mesure correspondante, et également contenus dans une seconde feuille électronique où figure la liste des différentes données requises afin de décrire exhaustivement un équipement, et si les équipements sont du type à géométrie variable d'autres mesures sont effectuées autour de la position des centres de gravité suivant le développement de l'équipement.

5. Procédé selon la revendication 1, où l'acquisition des données relatives à la saisie des données est effectuée en utilisant les données fournies par les constructeurs du tracteur et équipement, ou alors à travers une série de mesures des poids, avec le groupe tracteur/instrument en position horizontale et en position inclinée, les données requises étant obtenues à travers des calculs trigonométriques.

6. Procédé selon la revendication 1, où les données relatives à la saisie de données de chaque modèle de tracteur et équipement sont recueillies dans une banque de données et, au moment de l'installation, un constructeur, un revendeur ou un opérateur d'installation des véhicules est fourni d'une copie de la banque des données ou bien est en mesure de télédécharger la banque des données d'Internet ou analogues, et ce afin de pouvoir récupérer dans ladite banque des données l'ensemble des données requises suivant les tracteurs utilisées et leurs équipements correspondants.

7. Procédé selon la revendication 1, où chaque équipement est muni d'un petit circuit électronique pourvu d'une mémoire adaptée pour contenir les données inhérentes à l'introduction propre des données, l'accouplement de ce circuit au système de contrôle placé sur le véhicule tout terrain s'effectuant à travers un câble sériel, ou encore à travers une technologie wireless (transpondeur, radio, etc.).

8. Programme d'ordinateur comprenant des moyens de code du programme d'ordinateur capables d'effectuer toutes ou une partie des étapes dudit procédé selon une quelconque des revendications précédentes quand ce même programme est exécuté sur un ordinateur.

FIG. 1

EP 2 192 014 B1

FIG. 2

FIG. 3

EP 2 192 014 B1

FIG. 4

FIG. 5a

FIG. 5b

FIG. 5c

FIG. 5d

**Computation of Longitudinal Stability of Tractor and Tool**

Longitudinal Momentum Balance: $M * s <= 0.2 (T * i) + Z * (d + i)$

FIG. 6

EP 2 192 014 B1

Computation of Transverse Stability of Tractor and Tool

FIG. 7

Computation of Static Stability of Tractor and Tool

FIG. 8

EP 2 192 014 B1

**Computation of Front and Rear Axle Loads**

Known terms :

DP    = Tractor Pitch    D1 , D2  =  Tractor Longitudinal Barycentre Position

PT = Tractor Weight

Variables to obtain:

PTant = Front axle weight ,   PTpos = Rear axle weight

Writing the balance of momentum around the barycentre  (point B) we have:

PTant  * D1 = PTpos * D2      being PTpos = PT − PTant  with suitable substitutions, we obtain:

$$PTant = PT * D2 / (D1 + D2) \text{ and } PTpos = PT − PTant$$

FIG. 9

EP 2 192 014 B1

**Computation of Right and Left Axle Loads**

Known terms :

DC   = Tractor Track-Gauge  D3 , D4  =  Tractor Transverse Barycentre Position

PT = Tractor Weight

Variables to obtain:

PTdx = Right Axle Weight ,   PTsx = Left Axle Weight

Writing the balance of momentum around the transverse barycentre  (point B) we have:

PTsx  * D3 = PTdx * D4   being PTdx = PT − PTsx , with suitable substitutions we obtain:

$$PTsx = PT * D4 / ( D3 + D4 ) \text{ and } PTdx = PT − PTsx$$

# FIG. 10

EP 2 192 014 B1

**Variation of barycentre position with longitudinal inclination**

Known terms :

DP    = Tractor Pitch  D1 , D2  =  Tractor Longitudinal Barycentre Position
BHT = Tractor Barycentre Height
A =  Longitudinal Inclination Angle

Distances D1 and D2  change depending on amount ST , where

$$ST = BHT * \sin (A)$$

FIG. 11

EP 2 192 014 B1

**Variation of barycentre position with transverse inclination**

FIG. 12

Known terms :

DC = Tractor Track-Gauge     D3 , D4 = Tractor Transverse Barycentre Position
BHT = Tractor Barycentre Height
A = Transverse Inclination Angle

Distances D3 and D4 change depending on amount ST , where

$$ST = BHT * \sin (A)$$

EP 2 192 014 B1

# Tractor Data Entry Table

| TRACTOR | | | | |
|---|---|---|---|---|
| 1 | Model: | | | |
| 2 | Manufacturer: | | | |

| Generale Data | | mu | ret. Fig. | annotes |
|---|---|---|---|---|
| 1 | Max Length | mm | | |
| 2 | Max Width | mm | | |
| 3 | Max Height | mm | | |
| 4 | Min/Max Track | mm | | |
| 5 | Free span from ground | mm | | |
| 6 | Height at steer wheel | mm | | |
| 7 | Total weight (without ballasts) | Kg | PT | With on-board operator |
| 8 | Front axle weight | Kg | | |
| 9 | Rear axle weight | Kg | | |
| 10 | Ballast element weight | Kg | | |
| 11 | Maximum number of ballast elements | N | | |

| Data for axle load computation | | | | |
|---|---|---|---|---|
| 1 | Wheel base | mm | DP | |
| 2 | Rear axle width | mm | DC | |
| 3 | Height from ground-rear axle | mm | HAT | |
| 4 | TP connection distance from rear axle | mm | DAP | Horizontal arms |
| 5 | CoG longitudinal distance from rear axle | mm | BLT | |
| 6 | CoG transverse distance from centerline | mm | BTT | |
| 7 | CoG vertical distance from ground | mm | BHT | |
| 8 | Applied ballast weight | Kg | PZ | |
| 9 | CoG ballast distance from front axle | mm | BLZ | |
| 10 | | | | |

FIG. 13

EP 2 192 014 B1

## Data Entry Table of a Variable Geometry Tool

| TOOL | | | | |
|---|---|---|---|---|
| 1 | Model: | | | |
| 2 | Manufacturer: | | | |
| | | | | |
| | | | | |
| | | | | |
| | | | | |
| | | | | |
| | | | | |
| | | | | |
| **General Data** | | **mu** | **ref Fig.** | **Notes** |
| 1 | Max length | mm | | |
| 2 | Max width | mm | | |
| 3 | Max height | mm | | |
| 4 | Lateral translation | mm | | |
| | Number with PTO | mm | | |
| 5 | Max height from ground | mm | | |
| 7 | Total weight | Kg | PA | |
| | | | | |
| | | | | |
| | | | | |
| | | | | |
| | | | | |
| **Data for axle load computation** | | **mu** | | |
| 1 | CoG long. distance from third spot connection | mm | BLA | |
| 2 | CoG vert. distance from third spot connection | mm | BHA | |
| 3 | CoG trans. distance from centerline (in) | mm | BTA1 | |
| 4 | CoG trans. distance from centerline (centre) | mm | BTA2 | |
| 5 | CoG Trans. distance from centerline (out) | mm | BTA3 | |

FIG. 14

EP 2 192 014 B1

**EP 2 192 014 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008208416 A1